# FASCICULE DE BREVET EUROPEEN

(11) **EP 0 782 346 B1**
(45) Date de publication et mention de la délivrance du brevet: **16.08.2001**
(21) Numéro de dépôt: 96402891.4
(22) Date de dépôt: 26.12.1996
(51) Int. Cl.: H04N 7/52

(54) **Dispositif de démultiplexage pour un système de télévision digitale**
Demultiplexeinrichtung für ein digitales Fernsehsystem
Demultiplexing device for a digital television system

(30) Priorité: 29.12.1995 FR 9515767
(43) Date de publication de la demande: 02.07.1997
(73) Titulaire: THOMSON multimedia, 92648 Boulogne Cédex (FR)
(72) Inventeur: Hanna, Charaf, 92050 Paris la Defense Cedex (FR); Cochon, Etienne, 92050 Paris la Defense Cedex (FR); Dorner, Albert, 92050 Paris la Defense Cedex (FR)
(74) Mandataire: Ruellan-Lemonnier, Brigitte

(56) Documents cités:
- EP-A- 0 238 382
- EP-A- 0 506 294
- EP-A- 0 626 770
- EP-A- 0 651 584
- WO-A-94/08399
- GB-A- 2 063 626
- US-A- 5 228 028
- IEEE 1995 INTERNATIONAL CONFERENCE ON CONSUMER ELECTRONICS, 7 Juin 1995, ROSEMONT, IL, US, pages 250-251, XP000547808 FROIDEVAUX ET AL.: "MPEG1 and MPEG2 System Layer Implementation Trade-Off between Micro Coded and FSM Architecture"

## Description

L'invention concerne un dispositif de démultiplexage. Elle s'applique notamment dans le cadre de la réception de télévision numérique.

Les moyens de transmission de signaux digitaux exigent des circuits de réception qui analysent leur contenu pour déterminer si les informations transmises ont un intérêt pour une application donnée. Ceci est par exemple le cas dans des systèmes de télévision digitale compressée, de type MPEG2. Dans ce type de système, un grand nombre de canaux peuvent être multiplexés. Les données dans chaque canal comportent plusieurs couches qu'il faudra également analyser.

Il est souhaitable de disposer d'un dispositif de démultiplexage flexible.

La demande de brevet EP 0651584 décrit un dispositif de décodage d'un flux de données relatives à différentes couches, comportant un détecteur de code de début (start code), la détection s'effectuant par comparaison de données du flux reçu à des codes sélectionnés, la sélection étant fonction de la couche à laquelle appartiennent des précédentes données reçues. Un inconvénient de ce dispositif est qu'il est peu flexible et qu'il dépend d'une architecture dans les couches préétablis.

L'invention a pour objet un dispositif de démultiplexage comprenant
- des moyens de mémorisation de données d'un flux multiplexé,
- des moyens programmables de mémorisation de données de filtrage,
- des moyens de comparaison entre les données du flux multiplexé et les données de filtrage
- des moyens de transfert des données du flux multiplexé vers des moyens de stockage en fonction des comparaisons réalisées,
- au moins une machine d'état organisée selon une couche parmi les couches hiérarchiques de données dans le flux multiplexé et
- des moyens programmables de mémorisation de données de filtrage comportent une mémoire contenant pour chaque machine d'état des valeurs de filtres pour la couche qui correspond à cette machine.

Selon un mode de réalisation particulier, ladite couche est la couche de transport MPEG2, les valeurs des filtres comportant au moins l'un des types suivants: PID, compteur de continuité, donnée de synchronisation.

Selon un mode de réalisation particulier, les valeurs de filtres du compteur de continuité correspondent à la prochaine valeur attendue dans le flux de données multiplexé.

Selon un mode de réalisation particulier, ladite couche est la couche de section MPEG2, les valeurs des filtres comportant au moins l'un des types suivants: identificateur de table, pointeur de début de section, longueur de section.

Selon un mode de réalisation particulier, ladite couche est la couche de paquets de flux élémentaires MPEG2, les valeurs de filtres comportant l'identificateur de flux.

Selon un mode de réalisation particulier, ledit dispositif comprend en outre un multiplexeur dont une entrée est reliée à la sortie des moyens de mémorisation des données du flux multiplexé et dont une seconde entrée est reliée à la sortie d'un désembrouilleur, l'entrée du désembrouilleur étant également reliée à la sortie des moyens de mémorisation des données du flux multiplexé, le multiplexeur étant commandé par la ou les machines d'état.

L'invention a aussi pour objet un décodeur de télévision numérique caractérisé en ce qu'il comprend le dispositif de démultiplexage ci-dessus.

D'autres avantages et caractéristiques de l'invention apparaîtront à travers la description d'un exemple de réalisation particulier non limitatif illustré par les figures jointes.
La figure 1 représente un diagramme-bloc d'un démultiplexeur conforme à l'invention dans un système de réception de télévision digitale,
la figure 2 est un diagramme d'état du processeur de transport TP du démultiplexeur de la figure 1,
la figure 3 est un diagramme d'état du processeur de paquet de flux élémentaires PES du démultiplexeur de la figure 1,
la figure 4 est un diagramme d'état du processeur de section SEC du démultiplexeur de la figure 1 et
la figure 5 est un diagramme d'état du processeur de transfert XFER du démultiplexeur de la figure 1.

Dans ce qui suit, les termes en gras ou entre parenthèses et guillemets donnent, quand cela est jugé nécessaire pour la clarté de l'exposé, une désignation issue de la spécification MPEG2.

Les données relatives à un flux élémentaire ("Elementary stream") sont transportées dans des paquets dits PES (pour "Packetized elementary stream"). Chaque PES contient un identificateur de flux ("stream_id"). Chaque flux élémentaire (audio, vidéo ou autre) correspond à une composante d'un programme. Les flux élémentaires d'un même programme sont multiplexés pour la transmission. Une couche supplémentaire, la couche de transport, est utilisée pour cette transmission. Un paquet de transport contient un identificateur de paquet (dénommé PID). A travers des tables de correspondance, les relations entre PID et les flux élémentaires sont établis. Les tables de correspondance font partie des informations spécifiques de programmes ("PSI"), qui sont également transportés dans des paquets de transport, sous la forme de sections. La taille d'une section ou d'un PES peut être supérieure à la charge utile d'un paquet de transport.

Pour de plus amples détails sur notamment la structuration et le format des données, on se référera à la norme dite MPEG2: ISO/IEC 13818, et plus particulièrement à la partie 1 "Systems".

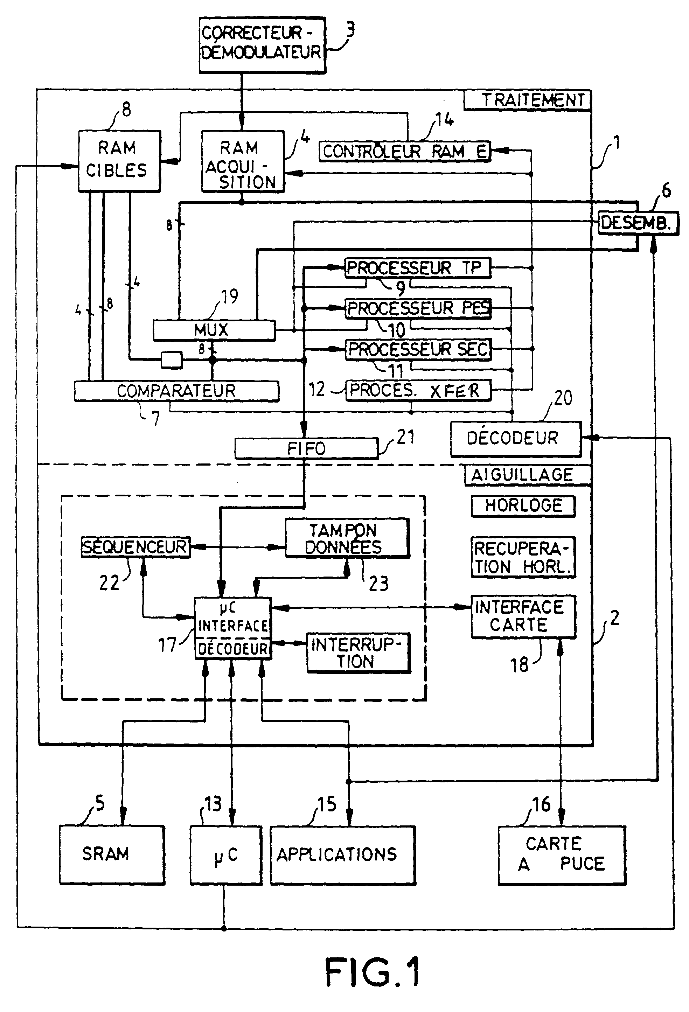

La figure 1 est un diagramme bloc d'un démultiplexeur conforme au présent exemple de réalisation. Le démultiplexeur comprend deux parties: une partie de traitement des données (1) et une partie d'aiguillage (2) vers les applications et périphériques.

La partie de traitement des données reçoit un flux multiplexé à partir d'un circuit de démodulation et de correction d'erreur 3 relié à un tuner non illustré. Selon le présent exemple de réalisation, elle en extrait jusqu'à neuf paquets de transport, correspondant à neuf PID distincts.

La partie de traitement des données utilise les en-tête et drapeaux des paquets de transport et des PES pour accéder aux données utiles. Certains champs sont envoyés, à travers la partie aiguillage 2, vers une RAM statique 5 utilisée comme tampon par le décodeur. Si les données utiles sont embrouillées, alors elles sont tout d'abord transmises à un circuit désembrouilleur 6 avant d'être traitées.

Une mémoire FIFO entre la partie de traitement et la partie d'embrouillage permet aux deux entités de travailler à des vitesses différentes.

Les données du flux multiplexé sont mémorisées dans une RAM d'acquisition asynchrone 4 et sont relus au fur et à mesure des besoins.

Pour l'analyse des données mémorisées dans la RAM 4, deux étapes sont généralement mises en oeuvre: une étape de lecture d'un octet dans cette RAM, puis une étape de comparaison, par un comparateur 7, avec un octet mémorisé dans une mémoire de cibles 8. Tous les octets mémorisés dans la RAM 4 ne sont pas comparés. Cette comparaison n'est réalisée que pour les octets pour lesquels cette opération est nécessaire. La partie de traitement décide des octets à comparer et, selon le résultat des comparaisons, décide également de rejeter un paquet de transport ou d'en transférer les données utiles à la partie d'aiguillage.

La comparaison ne s'effectue que sur des octets qui ont été désembrouillés le cas échéant. Un multiplexeur 19 réalise la sélection de la sortie de la RAM d'acquisition 4 et du désembrouilleur 6. La sortie du multiplexeur 19 est connectée à l'une des deux entrées du comparateur 7. l'autre entrée de ce comparateur est connectée à la sortie de la mémoire de cibles 8. Quatre bits de masquage issus de cette mémoire de cibles sont également pris en compte par le comparateur pour effectuer les comparaisons.

La lecture de la RAM d'acquisition 4 est déclenchée par l'un des processeurs (TP, PES et SEC respectivement 9, 10 et 11). Cette RAM est organisée en pile FIFO.

Un microcontrôleur *µ*C (13) gère la RAM de cibles 8 et y charge les octets cibles prédéfinis recherchés dans les paquets de transport.

Les processeurs 9 à 12 commandent la lecture d'octets dans la RAM de cibles par l'intermédiaire du contrôleur de cette RAM.

Pour chaque comparaison, un octet de la RAM 8 et un octet de la RAM d'acquisition 4 sont transmis au comparateur 7. Le résultat de la comparaison est transmis au processeur qui l'a déclenché sous la forme d'un bit mis à "1" si la comparaison est positive.

Quatre processeurs sont mis en oeuvre selon le présent exemple de réalisation:
(a) Le processeur TP (9) gère les octets concernant la couche de transport.
(b) Le processeur PES (10) gère les octets concernant la couche des paquets des flux élémentaires.
(c) Le processeur SEC (11) gère les octets concernant la couche des sections.
(d) Le processeur XFER (12) gère le transfert des données utiles vers la partie d'aiguillage.

Chacun des processeurs 9 à 12 comporte une machine d'état, ainsi que des registres et/ou compteurs. Un seul processeur est actif à un moment donné. Durant sa phase active, un processeur réalise généralement les étapes de lecture et de comparaison mentionées ci-dessus, puis active un autre processeur avant de se désactiver. Les couches et les octets de données reçus dans les paquets de transport déterminent la séquence d'activation et de fonctionnement des processeurs.

Lorsqu'un processeur est activé, il commence à traiter le prochain octet de données disponible dans la RAM d'acquisition 4. La prochaine comparaison sera effectuée avec l'octet lu dans la RAM de cibles pointée par une valeur pointeur maintenue spécifiquement par chaque processeur.

De manière simplifiée, lorsqu'un processeur doit transférer des données vers la partie d'aiguillage, il active le processeur XFER 12 avant de se désactiver.

Le multiplexeur 19 est commandé soit par le processeur TP, soit par le processeur PES. Cela dépend à quel niveau (paquets de transport ou paquets de flux élémentaires) l'embrouillage est réalisé.

Un décodeur 20 gère le décodage des adresses pour la mémoire cible, soit en provenance du microcontrôleur, soit en provenance d'un des processeurs. Il gère également le décodage des adresses des registres des processeurs quand le microcontrôleur doit y accéder.

Le décodeur contient également des registres dans lesquels sont stockés pour chaque flux élémentaire des paramètres tels que **stream_id** et **stream_type.** Toute information relative au flux traité à un moment donné est disponible à partir du décodeur pour les autres entités du circuit. (Ce flux est connu de par le paramètre data_stream_id que l'on verra plus loin en relation avec le processeur de transport TP).

Les différents processeurs seront vus plus en détail par la suite.

La partie d'aiguillage du démultiplexeur reçoit des données multiplexées de la partie traitement, ainsi qu'un identificateur de flux (data-stream_id).

Selon un mode de réalisation particulier, dit mode bufferisé, la partie d'aiguillage gère plusieurs zones tampon (buffers) dans la RAM statique 5, ces zones tampon ayant été allouées par le microcontrôleur 13. La partie aiguillage stocke les données reçues dans les zones tampon appropriées, en fonction de l'identificateur de flux.

Plusieurs interfaces 17, 18 gèrent la communication entre la RAM statique 5, le microcontrôleur et les applications externes 15 (décompresseur audio, décompresseur vidéo, télétexte...) et 16 (carte à puce pour le contrôle d'accès et le paiement des services). Chaque application lit les données qui la concernent dans les zones tampon qui lui sont réservées.

Le séquenceur 22 et le tampon données 23 gèrent respectivement le séquencement de l'accès à la mémoire statique 5 et l'adressage des zones tampon dans cette mémoire.

L'interface microcontrôleur 17 commute plus particulièrement les bus d'adresses et de données entre la mémoire 5, l'interface carte à puces, le microcontrôleur et les applications.

La partie suivante de la description concerne plus particulièrement la mémoire de cibles.

Selon la présent exemple, la mémoire de cibles 8 est une mémoire vive de 128*12 bits. Elle est utilisée pour le stockage des octets de filtrage. Chaque octet possède un masque de 4 bits permettant de masquer certains des bits de l'octet lors de la comparaison. 12 bits, dont 8 pour l'octet à comparer et 4 pour le masquage, sont donc stockés à chaque adresse de la mémoire 8 et sont utilisés en parallèle par le comparateur 7. Les seize masques de bits ainsi sélectionnables sont prédéfinis et stockés dans le comparateur 7.

Les processeurs TP, PES et SEC utilisent la mémoire de cibles pour le filtrage. Chaque processeur utilise une partie programmable de la mémoire de cibles.

Le premier octet de la mémoire de cibles (adresse 0) correspond au paquet PES et donc au processeur PES. Cet octet identifie le type de flux ("stream_id").

Le nombre d'adresses de la partie correspondant au processeur TP dépend du nombre du nombre d'identificateurs PID à filtrer. Un PID ayant une longueur de 13 bits, deux octets sont nécessaires, ce qui correspond à deux adresses par PID. De plus, une valeur attendue du compteur de continuité (ECC) est mémorisée par PID. En dernier lieu, il faut rajouter à cela un octet de synchronisation, qui est identique pour tous les paquets de transport et qui est par conséquent stocké une seule fois en début de la partie de la mémoire attribuée au processeur TP.

Le nombre d'adresses pour cette seconde partie est donc:
(Nombre de PID à filtrer * 3) + 1

L'organisation de cette seconde partie est:

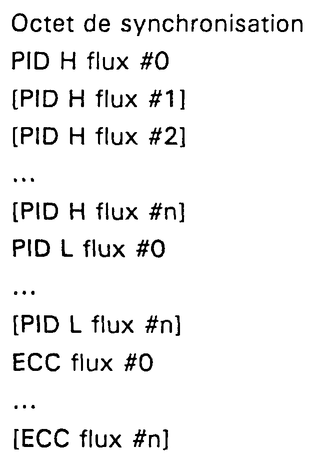

Selon le présent exemple de réalisation, n est strictement inférieur à 9.

En ce qui concerne la partie de la mémoire de cibles réservée au processeur de section SEC, le nombre d'adresses réservées est aussi fonction du nombre de PID. La mémoire comporte autant de zones section/flux ("Section/stream") qu'il y a de flux distincts. Chaque zone a sa propre adresse de départ (Section_TR_start_address).

Le premier octet de chaque zone est nul: il permet de vérifier que le pointeur de début de section ("pointer_field") est nul.

Les octets suivants correspondent aux identificateurs de table ("table_id"). Un certain nombre de tables pouvant être définies par l'utilisateur, le nombre d'identificateurs est variable et égal à filter_nb pour chaque zone.

Vient ensuite un demi-octet nul qui sera comparé au demi-octet haut de la longueur de section, dans le but de vérifier si la section déborde du paquet de transport.

La dernière partie de chaque zone comprend un certain nombre (filter_nb) de groupes d'octets de longueur filter_length qui seront à comparer au même nombre d'octets du paquet. Pour chaque octet du paquet, filter_nb comparaisons seront réalisées.

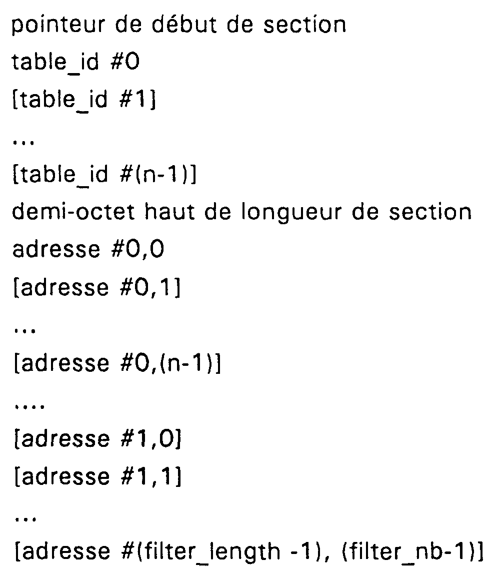

Le nombre total d'octets dans chaque zone est:
filter_nb * (filter_length + 1) + 2

La table 1 montre un exemple de configuration de la mémoire de cibles pour neuf PlDs et un exemple pour un filtrage de section pour deux table_id différents et deux groupes d'octets de 16 bits (c'est à dire filter_nb= 2 et filter_length = 2).

**TABLE 1**

| Adresse mémoire | Masque | Données mémoire | Utilisé par processeur | Commentaire |
|---|---|---|---|---|
| 0 | 0 | BF | PES | private stream 2 |
| 1 | 0 | 47 | TP | Octet de synchronisation |
| 2 | 3 | 5 MSB de PID0 | TP | |
| 3 | 3 | 5 MSB de PID1 | TP | |
| ... | | | ... | |
| A | 3 | 5 MSB de PID8 | TP | |
| B | 0 | 8 LSB de PID0 | TP | |
| C | 0 | 8 LSB de PID1 | TP | |
| ... | | | ... | |
| 13 | 0 | 8 LSB de PID8 | TP | |
| 14 | F | | TP | ECC du flux 0, masquage complet, mis à jour par TP |
| ... | | | ... | |
| 1C | F | | TP | ECC du flux 8, masquage complet, mis à jour par TP |
| 1D | O | 00 | SEC | Pointeur de début de section pour la première section/flux. |
| 1E | du | défini par l'utilisateur (du) | SEC | Première valeur recherchée pour table id (table id #0) |
| 1F | du | | SEC | Seconde valeur recherchée pour table id (table id #1) |
| 20 | 4 | 0 | SEC | Demi-octet de longueur de section |
| 21 | du | | SEC | Premier octet du premier groupe |
| 22 | du | | SEC | Premier octet du second groupe |
| 23 | du | | SEC | Second octet du premier groupe |
| 24 | du | | SEC | Second octet du second groupe |
| 25 | 0 | 00 | SEC | Pointeur de début de section pour la seconde section/flux. |
| 26 | du | | SEC | Première valeur recherchée pour table id (table id #0) |

Par exemple, une comparaison est positive si les octets appropriés d'une section sont égaux au contenu de l'une des colonnes de la table 2:

| | first filter / TR_addr | second filter / TR_addr |
|---|---|---|
| table_id | Address 1E | Address 1F |
| section_length high | | |
| section_length low | | |
| address #0 | Address 21 | Address 22 |
| address #1 | Address 23 | Address 24 |
| | | |

L'écriture des données dans la mémoire de cibles 8 est généralement effectuée par la microcontrôleur 13. Un cas particulier dans ce contexte est notamment le compteur de continuité, qui est écrit par le processeur TP (9).

Pour écrire dans la mémoire de cibles, le microcontrôleur utilise un pointeur appelé trp. Les processeurs peuvent accéder aux données qui les concernent en programmant le pointeur trp.

La valeur attendue du compteur de continuité ECC correspondant au dernier paquet de transport extrait du flux de données multiplexé pour un flux élémentaire donné est mémorisée dans la mémoire de cibles à l'adresse appropriée. Cette valeur correspond à la valeur du compteur de continuité extraite du dernier paquet de transport filtré, incrémenté d'une unité. ECC est utilisé lors de la comparaison avec le compteur de continuité ("continuity_counter") du prochain paquet de transport possédant le même PID.

Etant donné que la première valeur de ECC n'est pas définie, elle est initialement totalement masquée en choisissant la configuration de bits de masquage appropriée lors de l'écriture initiale dans la mémoire cible par le microcontrôleur. Lorsque la première valeur valide de ECC est écrite, les bits de masquage sont également réécrits.

Le contrôleur 14 de la mémoire de cible réalise le multiplexage entre les demandes d'accès à cette mémoire. Ces demandes peuvent provenir du microcontrôleur et des processeurs.

La partie suivante de la description concerne le processeur de la couche transport.

Le processeur TP est le premier processeur actif pour tous les paquets de transport.

Selon le présent exemple de réalisation, les octets lus et traités par ce processeur sont les suivants:

| | | |
|---|---|---|
| **(a)** | **sync_byte** | **8 bits** |
| **(b)** | **transport_error_indicator** | **1 bit** |
| | **payload_unit_start_indicator** | **1 bit** |
| | **transport_priority** | **1 bit** |
| | **PID_H** | **5 bits** |
| **(c)** | **PID_L** | **8 bits** |
| **(d)** | **transport_scrambling_control** | **2 bits** |
| | **adaptation_field_control** | **2 bits** |
| | **continuity_counter** | **4 bits** |

Ces dénominations correspondent toutes à la terminologie MPEG2. Les données sont lus octets par octets. Certaines variables telle que **transport_priority** ne sont pas prises en compte, mais sont lues car faisant appartenant à un octet contenant des variables qui elles devront être traitées.

Selon le présent exemple de réalisation, jusqu'à neuf flux de données peuvent être extraits. Il s'agit par exemple des flux:
- Flux de la table d'association de programmes (Paquets avec le PID #1)
- Flux de la table d'accès conditionnel (Paquets avec le PID #2)
- Flux de la section d'affectation des programmes
- Flux vidéo
- Flux audio
- Flux Teletext
- Flux des messages de gestion des droits d'accès (EMM)
- Flux des messages de contrôle des droits d'accès (ECM)
- Flux du guide de programmes

Les neuf valeurs de PID ne sont pas attribuées de façon définitive par le démultiplexeur. Le microcontrôleur sélectionne les flux de données en chargeant les PID dans la mémoire de cibles. Seuls les paquets de transport identifiés par un de ces neuf PID sont traités.

Le microcontrôleur associe à chaque flux un type de flux (stream_type) qui peut prendre l'une des valeurs suivantes: audio, vidéo, section, autre.

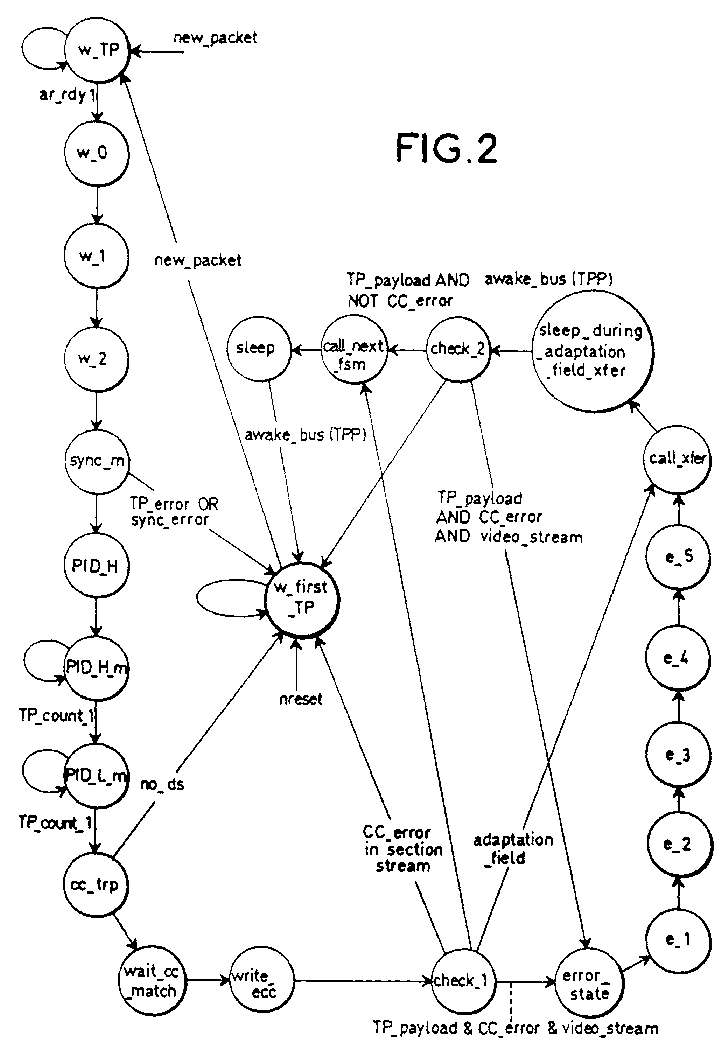

La figure 2 est un diagramme d'état de la machine d'état du processeur TP. L'état indiqué en gras (w_first_TP) est considéré comme l'état de départ de la machine d'état pour la suite de la description. Lorsqu'un nouveau paquet est attendu, le processeur TP se met en attente d'un signal de la mémoire d'acquisition, indiquant que celle-ci est prête à être lue (état w_TP, signal ar_rdy1). Viennent ensuite trois états d'attente, liés à l'implémentation physique et aux rapports des horloges d'écriture et de lecture de la mémoire d'acquisition.

Si l'octet de synchronisation **sync_byte** est incorrect (c'est à dire différent de 0x47), le paquet est rejeté (état sync_m), avec retour à l'état initial.

Si le drapeau **transport_error_indicator** est à "1", indiquant que les données du paquet de transport comportent au moins une erreur irrécupérable, alors le processeur TP rejette également le paquet (également état sync_m, condition TP_error).

Le processeur TP compare les bits hauts (_**H**) et bas (_**L**) des **PID** aux neuf PID cibles stockés dans la mémoire de cibles 8. La comparaison est d'abord effectuée avec les neuf octets hauts, puis avec les neuf octets bas. Un registre de neuf bits DSid_reg du processeur TP est chargé avec le résultat, dénommé data_stream_id. Un bit à "1" signifie qu'il y a l'égalité entre le PID du paquet traité et l'un des PID cibles. La position du bit indique le PID particulier dont il s'agit.

Si aucun bit du registre n'est à "1", alors le paquet de transport sera rejeté. Ce test est effectué à l'état cc_trp, qui est l'état de calcul du pointeur de la mémoire de cibles indiquant l'adresse du compteur de continuité attendu ECC pour le PID filtré. Si cette adresse n'est pas valide, alors l'erreur est avérée (no_ds).

Le processeur TP vérifie que pour un paquet correspondant à un PID donné, le compteur de continuité **continuity_counter** est bien égal à la valeur attendue ECC. Il attend pour cela le résultat de la comparaison effectuée par le comparateur 7 (état wait_cc_match). Il écrit ensuite la nouvelle valeur attendue ECC.

Vient ensuite une étape de vérification check_1. Plusieurs cas sont envisagés:
(a) S'il y a une charge utile dans le paquet (que cette charge corresponde à un PES ou une section) et que le compteur de continuité a la valeur correcte, le processeur PES ou le processeur SEC est activé (état call_next_fsm). C'est le drapeau **payload_unit_start_indicator** qui indique la présence du début d'un PES ou d'une section dans la charge utile du paquet de transport. Ce drapeau est mémorisé dans un registre start_indic_reg.
(b) Si le paquet contient dans sa charge utile un flux élémentaire de type vidéo, mais qu'il y a une erreur dans la continuité des paquets (compteur de continuité différent de la valeur attendue), alors un certain nombre d'octets d'erreur sont insérés dans la charge utile et transférés à la partie aiguillage (états error_state, e_x et call_xfer). La partie d'aiguillage stocke ces octets dans la zone tampon appropriée de la RAM statique. Le décodeur vidéo auquel la charge utile est destinée reconnait cette configuration d'octets et traite les informations en conséquence.
(c) Si la paire **adaptation_field_control** indique la présence d'un champ d'adaptation dans le paquet de transport, le processeur TP active le processeur XFER pour le transfert des octets de ce champ vers la partie d'aiguillage.
(d) Si le compteur de continuité ne possède pas une valeur correcte, et que le flux est de type section, alors le paquet est rejeté.

Pendant la phase active du processeur XFER, le processeur TP est en état de veille, en attendant d'être réactivé par le processeur XFER. Si le paquet de transport contient, en dehors du champ d'adaptation, également une charge utile et que le compteur de continuité possède une valeur correcte, le processeur TP active l'un des processeurs SEC ou PES (état check_2, puis call_next_fsm).

Dans le cas contraire, le processeur TP n'est activé que pour le paquet de transport suivant (état check_2).

Lorsqu'un des processeurs SEC ou PES a été activé, le processeur TP entre en veille (état sleep), en attendant d'être réactivé par ces processeurs.

La paire **transport _scrambling_control** indique si et de quelle façon la charge utile du paquet de transport est embrouillée. Ces bits sont mis en oeuvre par le processeur TP pour configurer le désembrouilleur 6 et contrôler le multiplexeur 19.

Pour rejeter un paquet de transport, le processeur TP se désactive simplement en attendant un signal de réinitialisation qui coïncide avec l'arrivée d'un nouveau paquet.

Le processeur TP possède trois registres. Le premier registre (DS_count_reg) contient le nombre maximal de paquets différents à extraire et est géré par le microcontrôleur, le second (TP_count_reg) est utilisé par le processeur TP comme index de boucle (nombre de comparaisons à effectuer par octet lu dans la mémoire d'acquisition). Le troisième registre a déjà été mentionné.

La partie suivante de la description concerne le processeur de paquets de flux élémentaires PES.

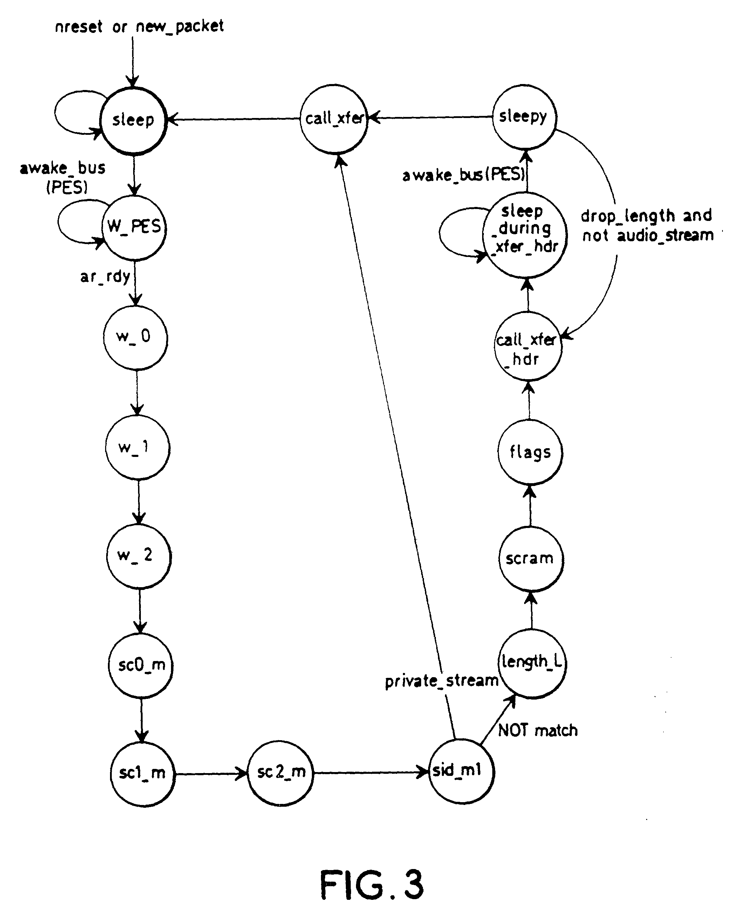

Selon le présent exemple de réalisation, ce processeur comprend une machine d'état (illustrée par la figure 3), ainsi que neuf registres de deux bits chacun. Il est activé par l'un des deux processeurs TP ou XFER.

Les octets suivants sont lus par le processeur PES. Seules les données munies d'un astérisque sont véritablement testées par le processeur. Les autres données sont masquées durant les comparaisons, comme cela est d'ailleurs le cas pour les autres processeurs. Cependant, l'en-tête entier du paquet PES est mémorisé pour être transféré à la partie aiguillage.

| | | |
|---|---|---|
| **(a, b,c)** | **packet_start_code_prefix** | **24 bits** |
| **(d)** | **stream_id*** | **8 bits** |
| **(e)** | **PES_packet_length_high** | **8 bits** |
| **(f)** | **PES_packet_length_low** | **8 bits** |
| **(g)** | **'10'** | **2 bits** |
| | **PES_scrambling_control *** | **2 bits** |
| | **PES_priority** | **1 bit** |
| | **data_alignment_indicator** | **1 bit** |
| | **copyright** | **1 bit** |
| | **original_or_copy** | **1 bit** |
| **(h)** | **PTS_DTS_flags** | **2 bits** |
| | **ESCR_flag** | **1 bit** |
| | **ES_rate_flag** | **1 bit** |
| | **DSM_trick_mode_flag** | **1 bit** |
| | **additional_copy_info_flag** | **1 bit** |
| | **PES_CRC_flag** | **1 bit** |
| | **PES_extension_flag** | **1 bit** |

Dans un premier temps, le processeur PES est en état de veille (Sleep). Il est activé par un signal awake_bus(PES) provenant d'un des processeurs TP ou XFER. Le processeur attend ensuite que la mémoire d'acquisition soit prête pour la lecture du prochain octet du paquet de transport courant (état W_PES et signal ar_rdy). Comme pour le processeur TP, un ceratin nombre d'états d'attente sont nécessaires pour synchroniser la mémoire d'acquisition et le processeur PES. Ce dernier lit les trois octets a, b et c correspondant à **packet_start_code_prefix** (états scx_m), puis l'octet identificateur de flux **stream_id** (état sid_m1). Si le flux est un flux privé (voir table 2-10 du document ISO/IEC 13818-1 ou ITU-T H.222.0- MPEG2 Systems), alors la processeur XFER est activé (état call_xfer) pour transférer la charge utile du paquet PES vers la partie d'aiguillage. On suppose en effet selon le présent exemple de réalisation que les flux privés sont entièrement pris en charge par les applications correspondantes, et qu'ils ne nécessitent pas un désembrouillage par le désembrouilleur 6.

Dans le cas contraire, les octets e et f sont lus, puis l'octet g (état scram), duquel on tire la paire **PES_scrambling_control** qui indique la présence d'un embrouillage de la charge utile du paquet PES. Ces bits servent comme précedemment à contrôler le désembrouilleur 6 et le multiplexeur 19. Etant donné que la charge utile embrouillée d'un paquet PES peut être répartie sur plusieurs paquets de transport, mais que seulement le premier paquet de transport contient la paire **PES_scrambling_control,** ces bits sont stockés dans un registre de deux bits. Le processeur PES contient un registre par flux, c'est à dire neuf pour le présent exemple de réalisation. Les registres sont mis à jour par les en-têtes des paquets PES suivants.

Après lecture et traitement de l'octet g, le processeur lit l'octet h. Celui-ci contient un certain nombre de drapeaux. Selon les possibilités du décodeur incorporant le démultiplexeur, ces drapeaux peuvent à ce moment être mis à des valeurs compatibles avec ces possibilités.

Les deux états suivants ont pour but de transférer l'en-tête du paquet PES à la partie d'aiguillage. Pendant ce temps, le processeur PES est mis en état de veille. Lorsque le transfert est fini, le processeur PES est réactivé par le processeur XFER. Le processeur PES enclenche alors le transfert de la charge utile du paquet PES (état call_xfer), comme précédemment.

Une fois ce transfert lancé, le processeur PES se met en veille.

La partie suivante de la description concerne le processeur de section SEC.

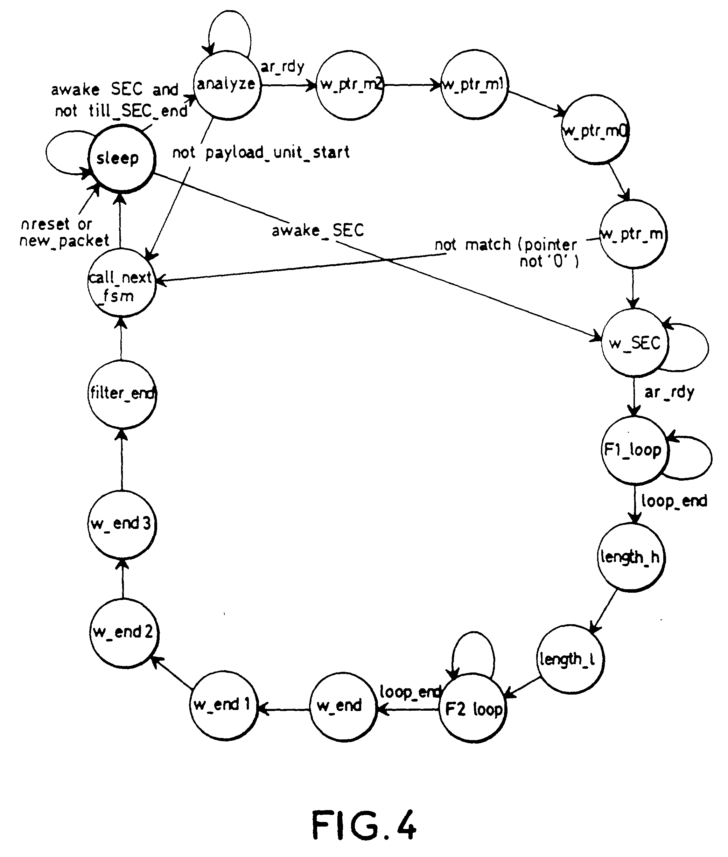

Le processeur SEC, destiné à traiter les données de la couche section, comporte une machine d'état (illustrée par la figure 4) et quatre registres. Il est activé par l'un des processeurs TP ou XFER. Les octets lus par le processeur sont les suivants:

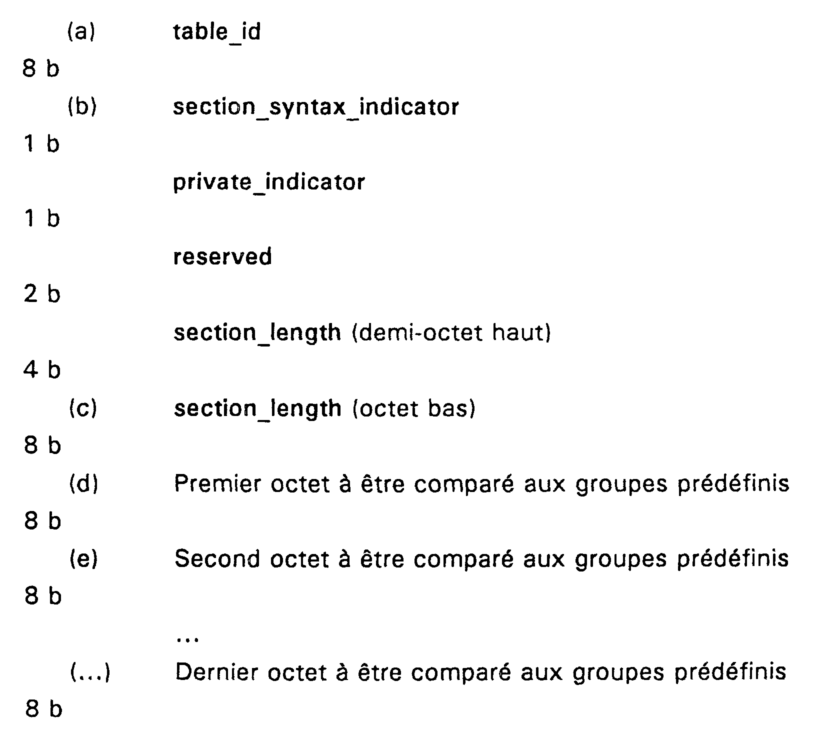

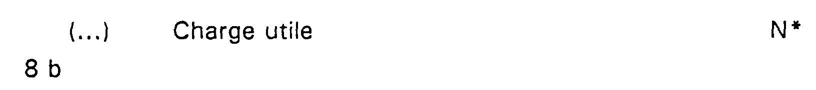

L'état de départ est l'état de veille (sleep). Lors de l'activation du processeur SEC, deux cas peuvent se présenter:
- la charge utile du paquet de transport courant comporte à son début le début d'une section,
- la charge utile du paquet de transport comporte des octets d'une section dont le début a été transmis dans un paquet de transport précédent.

Dans le premier cas, on passe à l'état d'attente w_sec, qui est maintenu tant qu'un signal ar_rdy indiquant que la mémoire d'acquisition est prête et contient au moins 6 octets n'est pas parvenu au processeur SEC.

Dans un premier temps, le processeur SEC pointe vers une zone section/flux de la mémoire de cibles. Ce pointeur est déterminé par le microcontrôleur pour chaque PID autorisé et stocké dans des registres lus par le processeur.

Chaque zone section/flux possédant plusieurs groupes d'octets prédéfinis pour la comparaison avec les octets de la section du paquet de transport, un filtrage sur plusieurs paramètres (EMM: ECM, attribution de programmes etc...) est implémentable pour chaque flux.

Le premier octet à être lu à partir de la mémoire d'acquisition en début de section est l'octet d'identification de table **table-id**. Il est comparé aux filter_nb octets correspondants de la mémoire de cibles. Ceci est représenté par la boucle autour de l'état F1_loop.

Les second et troisième octets à être lus sont les octets de longueur de section. Selon le présent exemple de réalisation, la seule comparaison effectuée l'est avec le demi-octet haut de l'octet bas de la longueur de section, pour vérifier si la section s'étend au delà du paquet de transport courant.

On compare ensuite les octets de la section avec les groupes d'octets prédéfinis stockés dans la mémoire de cibles (état F2_loop et boucle correspondante). Lors de la comparaison avec les octets d'un des groupes, un bit d'un registre (filter_reg) est mis à 1 par le processeur pour chaque comparaison positive. Cette information est gardée de paquet de transport en paquet de transport si la section occupe plus d'un paquet, dans le but de transférer la section entière vers la partie aiguillage.

Lorsqu'un des groupes d'octets prédéfinis est détecté dans une section, la section est transférée à la partie aiguillage (état call_next_fsm), une fois le filtrage terminé. Si la fin d'une section a été transférée, alors un signal d'interruption est généré pour indiquer au microcontrôleur que la section entière a été mémorisée dans la SRAM et qu'elle y est disponible.

Si aucune comparaison avec un groupe d'octets ne donne un résultat positif, alors la section est rejeté, et le contrôle est redonné au processeur TP.

Dans le second cas, le processeur SEC est activé alors qu'une section a déjà débuté. Le processeur analyse alors le registre suspend_reg pour déterminer si la fin de section présente au début de la charge utile du paquet de transport correspond à une section pour laquelle la comparaison a été positive. Dans ce cas, le processeur de transfert est appelé (état call_next_fsm). Dans le cas contraire, le processeur SEC calcule le pointeur (w_ptr) correspondant au début de la section suivante dans le même paquet de transport. On revient alors au cycles de filtrage/comparaison (état w_SEC).

Le processeur SEC possède quatre registres. Un premier registre (SECcount_reg) est utilisé comme index dans les deux boucles décrites en relation avec la machine d'état. Un second registre (filter_reg) est utilisé pour stocker les résultats de comparaison. Ce registre comprend filter_nb bits, chaque bit indiquant le résultat de comparaison pour un des groupes d'octets prédéfinis. Un troisième registre (suspend_reg) mémorise les résultats de filtrage pour chaque flux, pour que le contenu d'une section occupant plusieurs paquets puisse être transféré vers la partie d'aiguillage. C'est aussi à partir de ce registre que sont générés les interruptions en fin de section. Un dernier registre (SEC_length_reg) est utilisé pour compter la longueur de la section.

Selon le présent exemple de réalisation, tous les octets à comparer d'une même section sont supposés être transmis dans un même paquet de transport. Les autres octets d'une section peuvent s'étaler sur d'autres paquets de transport.

La partie suivante de la description concerne plus particulièrement le processeur de transfert XFER.

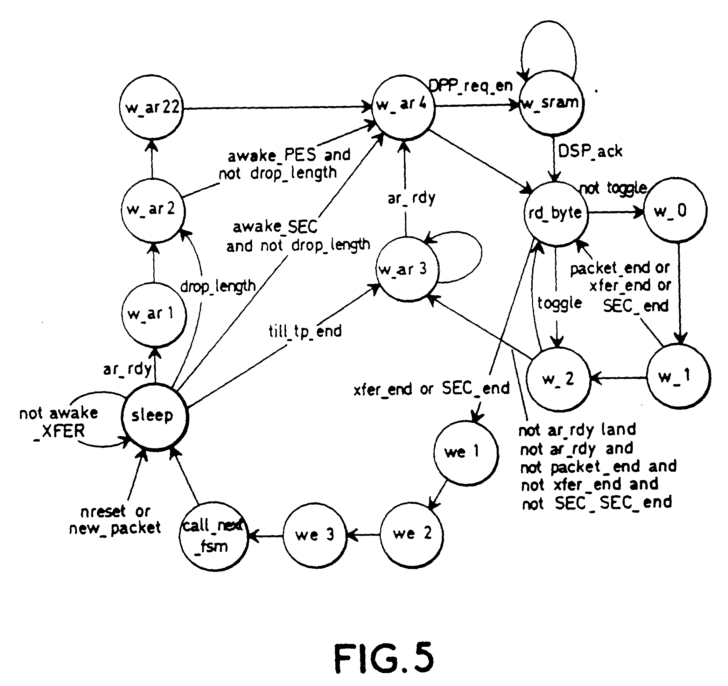

Le processeur XFER est activé par tout autre processeur ayant des données à transférer à la partie aiguillage. Il comprend une machine d'état (figure 5), un registre (packet_length_reg) et deux compteurs: xfer_count_reg et ar_count. Le processeur XFER n'accède pas à la mémoire de cibles.

Le registre packet_length_reg contient la longueur du paquet, c'est à dire 188 octets dans le cas de paquets de transport MPEG2. Un compteur interne (packet_count_reg) est chargé avec cette valeur en début de paquet de transport par le microcontrôleur et est décrémenté chaque fois qu'un octet est lu dans la mémoire d'acquisition.

Le compteur xfer_count_reg est utilisé par le processeur XFER pour stocker le nombre d'octets à transférer.

Le compteur ar_count est utilisé pour générer des signaux du type ar-rdy (mémoire d'acquisition prête). Il synchronise les données en provenance du démodulateur-correcteur d'erreur et compare les pointeurs de lecture et d'écriture de la mémoire d'acquisition.

L'état de départ est encore une fois l'état de veille (sleep).

Si un signal till_TP_end a été activé par le processeur appelant, alors le processeur XFER transfère tous les octets restants du paquet de transport vers la partie d'aiguillage. Dans le cas contraire, le processeur lit le premier octet dans la mémoire d'acquisition et le considère comme le nombre d'octets à transférer. Si le signal drop_length_bus est validé, alors ce premier octet n'est pas transmis à la partie d'aiguillage. Cette fonction dépend aussi du processeur ayant activé le processeur XFER et du nombre d'octets présents dans la mémoire d'acquisition.

Pour chaque session de transfert, le processeur XFER attend que 6 octets soient disponibles dans la mémoire d'acquisition ou dans le désembrouilleur. Il ouvre alors une sessions de transfert en envoyant à la partie d'aiguillage un signal DPP_req (état w_ard) et attend le retour de cette partie (état w_sram).

Quand le DSP est prêt à recevoir des données, il répond par un signal DSP_ack. Le processeur XFER lit alors les octets dans la mémoire d'acquisition (état rd_byte) et les transfère à la partie d'aiguillage. Après le transfert d'un octet, le processeur reboucle pour transférer le prochain octet jusqu'à une condition de fin de transfert: fin de paquet, fin de section ou fin de transfert (états w_0, w_1 et w_2).

Si aucune condition de fin n'est remplie, alors le processeur attend (état W_ar3) la disponibilité de six autres octets dans la mémoire d'acquisition (ar_rdy=1) pour formuler une nouvelle requête de session de transfert.

En cas de condition de fin, le processeur XFER réactive le processeur qui l'a activé et se met en veille (états call_next_fsm et sleep).

## Revendications

1. Dispositif de démultiplexage pour un flux de données multiplexées arrangées selon des couches hiérarchiques, comprenant des moyens de mémorisation de données du flux multiplexé (4), caractérisé en ce qu'il comporte également :
- au moins une machine d'état (9, 10, 11, 12) dédiée à une couche parmi les couches hiérarchiques de données dans le flux multiplexé, pour le traitement de données de la dite couche
- des moyens programmables de mémorisation de données de filtrage (8), chaque machine d'état (9, 10 11, 12) contrôlant la lecture des données de filtrage mémorisées correspondant à la couche à laquelle la machine est dédiée
- des moyens de comparaison (7) pour comparer les données du flux multiplexé et les données de filtrage lues, et
- des moyens de transfert (12) des données du flux multiplexé vers des moyens de stockage (5) en fonction des comparaisons réalisées.

2. Dispositif selon la revendication 1, caractérisé en ce que ladite couche est la couche de transport MPEG2, les valeurs des données de filtrage comportant au moins l'un des types suivants : PID, compteur de continuité, donnée de synchronisation.

3. Dispositif selon la revendication 2, caractérisé en ce que les valeurs des données de filtrage du compteur de continuité correspondent à la prochaine valeur attendue dans le flux de données multiplexé.

4. Dispositif selon la revendication 1, caractérisé en ce que ladite couche est la couche de section MPEG2, les données de filtrage étant relatives à au moins l'un des types suivants : identificateur de table, pointeur de début de section, longueur de section.

5. Dispositif selon la revendication 1, caractérisé en ce ladite couche est la couche de paquets de flux élémentaires MPEG2, les données de filtrage étant relatives à l'identificateur de flux.

6. Dispositif selon l'une des revendications 2, 3 ou 4, caractérisé en ce que ledit dispositif comprend en outre un multiplexeur (19) dont une entrée est reliée à la sortie des moyens de mémorisation des données du flux multiplexé et dont une seconde entrée est reliée à la sortie d'un désembrouilleur (6), l'entrée du désembrouilleur étant également reliée à la sortie des moyens de mémorisation des données du flux multiplexé, le multiplexeur étant commandé par la ou les machines d'état (9, 10).

7. Décodeur de télévision numérique, caractérisé en ce qu'il comporte le démultiplexeur selon l'une des revendications précédentes.

## Claims

1. Demultiplexing device for a stream of multiplexed data arranged in hierarchical layers, comprising means for storing data of the multiplexed stream (4), characterized in that it also comprises:
- at least one state machine (9, 10, 11, 12) dedicated to one layer from among the hierarchical layers of data in the multiplexed stream, for the processing of data of the said layer
- programmable means of storing filtering data (8), each state machine (9, 10, 11, 12) controlling the reading of the stored filtering data corresponding to the layer to which the machine is dedicated
- means of comparison (7) for comparing the data of the multiplexed stream and the filtering data read, and
- means (12) of transferring the data of the multiplexed stream to storage means (5) as a function of the comparisons made.

2. Device according to Claim 1, characterized in that the said layer is the MPEG2 transport layer, the values of the filtering data comprising at least one of the following types: PID, continuity counter, synchronization datum.

3. Device according to Claim 2, characterized in that the values of the filtering data of the continuity counter correspond to the next value expected in the multiplexed data stream.

4. Device according to Claim 1, characterized in that the said layer is the MPEG2 section layer, the filtering data being that relating to at least one of the following types: table identifier, start of section pointer, section length.

5. Device according to Claim 1, characterized in that the said layer is the layer of MPEG2 elementary stream packets, the filtering data being that relating to the stream identifier.

6. Device according to one of Claims 2, 3 or 4, characterized in that the said device furthermore comprises a multiplexer (19), one input of which is linked to the output of the means for storing the data of the multiplexed stream and a second input of which is linked to the output of a descrambler (6), the input of the descrambler also being linked to the output of the means for storing the data of the multiplexed stream, the multiplexer being controlled by the state machine or machines (9, 10).

7. Digital television decoder, characterized in that it comprises the demultiplexer according to one of the preceding claims.

## Patentansprüche

1. Demultipexeinrichtung für einen Strom von in hierarchischen Schichten angeordneten gemultiplexten Daten mit Mitteln (4) zur Speicherung der Daten des gemultiplexten Stroms, gekennzeichnet durch folgende Merkmale:
- wenigstens eine Zustandseinheit (9, 10, 11, 12) speziell für eine Schicht unter den hierarchischen Datenschichten in dem gemultiplexten Strom für die Verarbeitung der Daten der Schicht,
- programmierbare Mittel (8) zur Speicherung von Filterungsdaten, wobei jede Zustandseinheit (9, 10, 11, 12) das Lesen der gespeicherten Filterungsdaten steuert, die der Schicht entsprechen, für die die Zustandseinheit vorgesehen ist,
- Vergleichsmittel (7) zum Vergleichen der Daten des gemultiplexten Datenstroms und der gelesenen Filterungsdaten und
- Übertragungsmittel (12) für die Daten des gemultiplexten Stroms zu den Speichermitteln (5) in Abhängigkeit von den durchgeführten Vergleichen.

2. Einrichtung nach Anspruch 1, dadurch gekennzeichnet, daß die Schicht die Transportschicht MPEG2 ist und die Werte der Filterungsdaten wenigstens einen der folgenden Typen enthalten: PID, Kontinuitätszähler, Synchronisierdaten.

3. Einrichtung nach Anspruch 2, dadurch gekennzeichnet, daß die Werte der Filterungsdaten des Kontinuitätszählers dem nächsten, in dem gemultiplexten Datenstrom erwarteten Wert entsprechen.

4. Einrichtung nach Anspruch 1, dadurch gekennzeichnet, daß die Schicht die Schicht des Abschnitts MPEG2 ist, die Filterungsdaten wenigstens einen der folgenden Typen enthalten: Tabellen-Identifizierer, Start des Auswahlzeigers, Sektionslänge.

5. Einrichtung nach Anspruch 1, dadurch gekennzeichnet, daß die Schicht die Schicht mit elementaren Strompaketen MPEG2 ist und die Filterungsdaten den Strom-Identifizierer enthalten.

6. Einrichtung nach einem der Ansprüche 2, 3 oder 4, dadurch gekennzeichnet, daß die Einrichtung unter anderem einen Multiplexer (19) enthält, von dem ein Eingang mit dem Ausgang der Mittel zum Speichern der Daten des gemultiplexten Stroms verbunden ist und von dem ein zweiter Eingang mit dem Ausgang eines Entwürfelers (6) verbunden ist, und daß der Eingang des Entwürfelers gleichermaßen mit dem Ausgang der Mittel zur Speicherung der Daten des gemultiplexten Stroms verbunden ist und der Multiplexer durch den oder die Zustandseinheiten (9, 10) gesteuert wird.

7. Digitaler Fernsehdekoder, dadurch gekennzeichnet, daß er den Demultiplexer nach einem der vorangehenden Ansprüche enthält.
